# EUROPEAN PATENT APPLICATION

(11) **EP 3 567 537 A1**
(43) Date of publication of application: **13.11.2019**
(21) Application number: 17890236.7
(22) Date of filing: 26.12.2017
(51) Int. Cl.: G06Q 30/00

(54) **ORDER PROCESSING SYSTEM**

(30) Priority: 06.01.2017 CN 201710010765
(71) Applicant: Alibaba Group Holding Limited, Grand Cayman (KY)
(72) Inventor: WEN, Liangfan, Zhejiang 311121 (CN)
(74) Representative: Finnegan Europe LLP
(86) International application number: PCT/CN2017/118523
(87) International publication number: WO 2018/126943

(57) **Abstract**

An order processing system, an order processing method and apparatus, an order-picking batch generation method and apparatus, and an electronic device are disclosed in this application. The system comprises: an order processing apparatus and an order-picking batch generation apparatus. The order processing apparatus is configured to generate a corresponding order according to commodity ordering information input by a user; judge whether the rear field stock quantity of a commodity object related to the order meets the ordering quantity; and if yes, start a rear field order processing unit configured to perform rear field stock occupation for the commodity object related to the order and label the stock occupation type of the order as a rear field type. The order-picking batch generation apparatus is configured to acquire at least one outgoing order; and include the at least one order in an order-picking batch matching an attribute of the order according to the stock occupation type of the order. The order processing system provided in this application can effectively improve the order-picking and delivery efficiency of a store.

## Description

This application claims priority to Chinese Patent Application No. 201710010765.7 filed on January 6, 2017 and entitled "ORDER PROCESSING SYSTEM", which is incorporated herein by reference in its entirety.

### Technical Field

This application relates to the field of data processing technologies, and in particular, to an order processing system. This application also relates to an order processing method, apparatus, and electronic device, and an order-picking batch generation method, apparatus, and electronic device.

### Background

A fresh food store is a store that is similar to a supermarket. It mainly sells fresh commodities, and it supports both online and offline purchasing. When a user purchases a commodity through an online APP order, a payment can be made through a third-party payment account. If the user purchases commodities directly in the store, the payment can be made through a POS machine at the store.

The fresh food store provides home delivery services for online orders. To deliver an online-ordered commodity to a customer's home, order-picking is first required, in which an order-picker picks out the commodity in the order. Then, delivery is performed, in which the picked commodity is delivered by a deliverer. The fresh food store features simultaneous online and offline sales, and the commodities are usually stored in a front field of the store. Therefore, the following problem is likely to occur: a user successfully orders a commodity online, but an order-picker, during order-picking, finds that the commodity has been bought offline, such that the online order cannot be order-picked and delivered.

In an actual application, to improve order-picking efficiency and delivery speed, multiple order-picking waves typically are formed for online orders based on a certain batching rule, and orders of the same order-picking wave are order-picked jointly and delivered jointly. When the orders of an order-picking wave are picked, if a commodity of this wave has insufficient stock due to the aforementioned stock competition, the overall delivery speed of the orders in this wave will be affected.

To sum up, when commodities are sold online and offline simultaneously, there is a problem of failed order-picking and delivery due to insufficient stock of online-ordered commodities.

### Summary of the Invention

An order processing system is provided in the present invention to solve the problem of failed order-picking and delivery due to insufficient stock of online-ordered commodities in the prior art. This application also relates to an order processing method, apparatus, and electronic device, and an order-picking batch generation method, apparatus, and electronic device.

An order processing system is provided in the present invention, comprising: an order processing apparatus and an order-picking batch generation apparatus,
wherein the order processing apparatus includes: an order generation unit, a rear field stock judging unit, and a rear field order processing unit;
the order generation unit is configured to generate a corresponding order according to commodity ordering information input by a user;
the rear field stock judging unit is configured to judge whether the rear field stock quantity of a commodity object related to the order meets the ordering quantity; and if yes, start the rear field order processing unit; and
the rear field order processing unit is configured to perform rear field stock occupation for the commodity object related to the order and label the stock occupation type of the order as a rear field type; and
the order-picking batch generation apparatus includes an order acquisition unit and an order batching unit,
the order acquisition unit is configured to acquire at least one outgoing order; and
the order batching unit is configured to include the at least one order in an order-picking batch matching an attribute of the order according to the stock occupation type of the order.

Optionally, the rear field stock judging unit includes:
a rear field stock quantity acquisition sub-unit configured to acquire, according to a preset storage location occupation rule, storage location information of rear field stock that can be occupied by the commodity object, and acquire the rear field stock quantity of the commodity object according to the stock quantity of each of the storage locations;
a rear field stock judging sub-unit configured to judge whether the rear field stock quantity is greater than or equal to the ordering quantity.

Optionally, the preset storage location occupation rule includes at least one of the following rules: a universal storage location occupation rule for orders, and a specified storage location occupation rule for commodity objects.

Optionally, the commodity object related to the order includes a plurality of commodity objects; and
the rear field stock judging unit is specifically configured to judge whether the rear field stock quantity of each of the commodity objects meets the ordering quantity thereof, wherein the judgment result of the unit is yes when the rear field stock quantities of the various commodity objects all meet the ordering quantities thereof.

Optionally, the order processing apparatus includes a non-rear field order processing unit;
the rear field stock judging unit is configured to start the non-rear field order processing unit if the judgment result is no; and
the non-rear field order processing unit is configured to perform stock occupation for the commodity object related to the order according to a preset stock occupation mode; label the stock occupation type of the order as a front field type if the order occupies front field stock; and label the stock occupation type of the order as a front-rear field hybrid type if the order occupies front field stock and rear field stock.

Optionally, the preset stock occupation mode includes: occupying front field stock after the rear field stock is fully occupied, or occupying rear field stock after the front field stock is fully occupied.

Optionally, the order batching unit includes:
a rear field order batching sub-unit configured to screen out orders of the rear field type from the at least one order, and include each order of the rear field type in a rear field order-picking batch matching an attribute of the order according to a preset order batching rule.

Optionally, the order batching unit includes:
a front field order batching sub-unit configured to screen out orders of the front field type from the at least one order, and include each order of the front field type in a front field order-picking batch matching an attribute of the order according to the preset order batching rule; and
a front-rear field hybrid order batching sub-unit configured to screen out orders of the front-rear field hybrid type from the at least one order, and include each order of the front-rear field hybrid type in a front-rear field hybrid order-picking batch matching an attribute of the order according to the preset order batching rule.

An order processing method is further provided in this application, comprising:
generating a corresponding order according to commodity ordering information input by a user;
judging whether the rear field stock quantity of a commodity object related to the order meets the ordering quantity; and if yes, proceeding to the next step; and
performing rear field stock occupation for the commodity object related to the order, and labeling the stock occupation type of the order as a rear field type.

Optionally, before judging whether the rear field stock quantity of a commodity object related to the order meets the ordering quantity, the method includes:
acquiring, according to a preset storage location occupation rule, storage location information of rear field stock that can be occupied by the commodity object; and
acquiring the rear field stock quantity of the commodity object according to the stock quantity of each of the storage locations.

Optionally, the preset storage location occupation rule includes at least one of the following rules: a universal storage location occupation rule for orders, and a specified storage location occupation rule for commodity objects.

Optionally, the commodity object related to the order includes a plurality of commodity objects; and
judging whether the rear field stock quantity of a commodity object related to the order meets the ordering quantity is performed in the following manner:
judging whether the rear field stock quantity of each of the commodity objects meets the ordering quantity thereof, wherein the judgment result of this step is yes when the rear field stock quantities of the various commodity objects all meet the ordering quantities thereof.

Optionally, if the judgment result is no, the following steps are performed:
performing stock occupation for the commodity object related to the order according to a preset stock occupation mode;
labeling the stock occupation type of the order as a front field type if the order occupies front field stock; and
labeling the stock occupation type of the order as a front-rear field hybrid type if the order occupies front field stock and rear field stock.

Optionally, the preset stock occupation mode includes: occupying front field stock after the rear field stock is fully occupied, or occupying rear field stock after the front field stock is fully occupied.

Correspondingly, an order processing apparatus is further provided in this application, comprising:
an order generation unit configured to generate a corresponding order according to commodity ordering information input by a user;
a judging unit configured to judge whether the rear field stock quantity of a commodity object related to the order meets the ordering quantity; and if yes, proceed to the next step; and
an executing unit configured to perform rear field stock occupation for the commodity object related to the order and label the stock occupation type of the order as a rear field type.

Correspondingly, an electronic device is further provided in this application, comprising:
a processor; and
a memory configured to store a program for implementing an order processing method, wherein after the device is powered on and runs the program of the order processing method through the processor, the following steps are executed:
   generating a corresponding order according to commodity ordering information input by a user;
   judging whether the rear field stock quantity of a commodity object related to the order meets the ordering quantity; and if yes, proceeding to the next step; and
   performing rear field stock occupation for the commodity object related to the order, and labeling the stock occupation type of the order as a rear field type.

Moreover, an order-picking batch generation method is further provided in this application, comprising:
acquiring at least one outgoing order; and
including the at least one order in an order-picking batch matching an attribute of the order according to the stock occupation type of the order.

Optionally, the stock occupation types include: a rear field type, a front field type, or a front-rear field hybrid type.

Optionally, including the at least one order in an order-picking batch matching an attribute of the order according to the stock occupation type of the order includes:
screening out orders of the rear field type from the at least one order, and including each order of the rear field type in a rear field order-picking batch matching an attribute of the order according to a preset order batching rule;
screening out orders of the front field type from the at least one order, and including each order of the front field type in a front field order-picking batch matching an attribute of the order according to the preset order batching rule; and
screening out orders of the front-rear field hybrid type from the at least one order, and including each order of the front-rear field hybrid type in a front-rear field hybrid order-picking batch matching an attribute of the order according to the preset order batching rule.

Correspondingly, an order-picking batch generation apparatus is further provided in this application, comprising:
an order acquisition unit configured to acquire at least one outgoing order; and
a classifying unit configured to include the at least one order in an order-picking batch matching an attribute of the order according to the stock occupation type of the order.

Correspondingly, an electronic device is further provided in this application, comprising:
a processor; and
a memory configured to store a program for implementing an order-picking batch generation method, wherein after the device is powered on and runs the program of the order-picking batch generation method through the processor, the following steps are executed:
   acquiring at least one outgoing order; and
   including the at least one order in an order-picking batch matching an attribute of the order according to the stock occupation type of the order.

Compared with the prior art, this application has the following advantages:
With the order processing system provided in this application, goods of a commodity are separately stored in a front field and a rear field of a store, and the commodity storage locations are set as front field types and rear field types. When the store receives an online order, rear field stock occupation is performed for the order. If the rear field stock occupation succeeds, the stock occupation type of the order is labeled as the rear field type. When an order-picking batch is generated, at least one outgoing order is included in an order-picking batch matching an attribute of the order according to the stock occupation type of the order. In this processing manner, stock occupied by online orders can be effectively separated from stock of commodities sold offline, so that online stock and offline stock will not affect each other, thus avoiding the problem of failed order-picking and delivery due to insufficient stock of online orders. Therefore, the order processing system provided in this application can effectively improve the order-picking and delivery efficiency of the store.

### Brief Description of the Drawings

FIG. 1 is a schematic diagram of an embodiment of an order processing system according to this application;
FIG. 2 is a flowchart of an embodiment of an order processing method according to this application;
FIG. 3 is a schematic diagram of an embodiment of an order processing apparatus according to this application;
FIG. 4 is a schematic diagram of an embodiment of an electronic device according to this application;
FIG. 5 is a flowchart of an embodiment of an order-picking batch generation method according to this application;
FIG. 6 is a schematic diagram of an embodiment of an order-picking batch generation apparatus according to this application; and
FIG. 7 is a schematic diagram of an embodiment of an electronic device according to this application.

### Detailed Description

Numerous specific details are set forth in the description below in order to provide a thorough understanding of this application. However, this application can be implemented in many other ways different from those described herein, and those skilled in the art can make similar generalizations without departing from the meaning of this application. Thus, this application is not limited by the specific implementations disclosed below.

In this application, an order processing system, an order processing method, apparatus, and electronic device, and an order-picking batch generation method, apparatus, and electronic device are provided, which will be described in detail one by one in the following embodiments.

A basic idea of the order processing system provided by this application is that goods of a commodity are separately stored in a front field and a rear field of a store, and the commodity storage locations are set as front field types and rear field types. When the store receives an online order, rear field stock occupation is performed for the order. If the rear field stock occupation succeeds, the stock occupation type of the order is labeled as the rear field type. When an order-picking batch is generated, at least one outgoing order is included in an order-picking batch matching an attribute of the order according to the stock occupation type of the order. Stock occupied by online orders is separated from stock of commodities sold offline, and therefore online stock and offline stock will not affect each other, thus avoiding the problem of failed order-picking and delivery due to insufficient stock of online orders. Therefore, the order-picking and delivery efficiency of the store can be effectively improved.

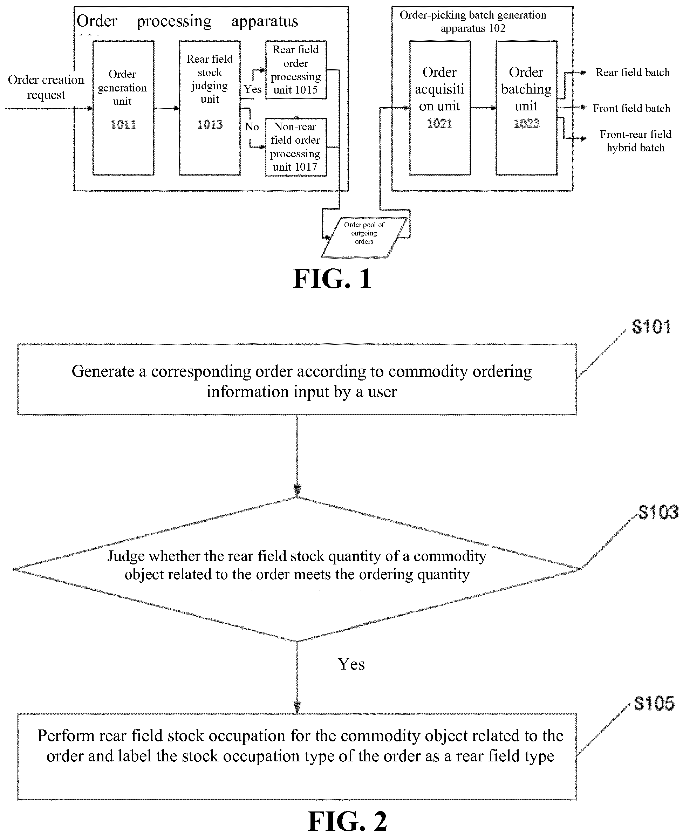

Please refer to FIG. 1, which is a schematic diagram of an embodiment of an order processing system according to this application. The system implementation includes an order processing apparatus 101 and an order-picking batch generation apparatus 102.

The order processing apparatus 101 and the order-picking batch generation apparatus 102 are generally deployed at a server end, but are not limited to a server. The order processing apparatus 101 is configured to generate an order and perform stock occupation for a commodity object related to the order. The order-picking batch generation apparatus 102 is configured to divide outgoing orders into order-picking batches.

The order processing apparatus 101 includes an order generation unit 1011, a rear field stock judging unit 1013, and a rear field order processing unit 1015. The order generation unit 1011 is configured to generate a corresponding order according to commodity ordering information input by a user. The rear field stock judging unit 1013 is configured to judge whether the rear field stock quantity of the commodity object related to the order meets the ordering quantity and, if the determination result is yes, start the rear field order processing unit 1015. The rear field order processing unit 1015 is configured to perform rear field stock occupation for the commodity object related to the order and label the stock occupation type of the order as a rear field type.

In actual applications, the order processing apparatus 101 generally further includes an order creation request receiving unit configured to receive an order creation request sent by a client. A user of the client first purchases a commodity object on an online mall and performs an ordering operation. The client sends an order creation request to a server according to the user's ordering operation, and the order creation request receiving unit of the server end receives the order creation request sent by the client. Then, a corresponding order is generated by the order generation unit 1011 according to the commodity ordering information carried by the order creation request.

When the order is generated, a stock occupation operation needs to be performed for the commodity object related to the order. Stock occupation is different from stock deduction. Through the stock occupation operation on the commodity object, an online saleable quantity of the commodity object can be updated, thereby ensuring that other users will not use the stock when placing orders. Stock deduction refers to an operation of actually updating the stock quantity of a commodity when the commodity leaves the warehouse. It can be seen that the stock occupation operation will affect the online saleable quantity of the commodity object, and the stock deduction operation will affect the actual stock quantity of the commodity object.

As an optional solution, when the stock occupation operation is performed for a commodity object, the specific goods location of the occupied commodity stock may be specifically recorded. This processing method enables that only storage locations in which stock has been occupied are counted during subsequent stock counting. Therefore, the workload of stock counting can be effectively reduced, thereby increasing the speed of stock counting.

The order processing system provided in the embodiment of this application emphasizes first performing rear field stock occupation for the commodity object related to the order when the rear field commodity stock is sufficient. With this processing method, order-picking for online orders targets rear field commodity stock, and offline commodity sales target front field commodity stock, which can prevent online orders and offline commodity sales from competing for the same commodity stock. Therefore, failed order-picking will not occur for an order that occupies rear field stock, thereby effectively guaranteeing order-picking and delivery efficiency.

Due to the emphasis on performing rear field stock occupation on an order when the rear field commodity stock is sufficient, after the order is generated by the order generation unit 101, the order processing system provided by the embodiment of this application will first start the rear field stock judging unit 1013 to judge whether the rear field stock quantity of the commodity object related to the order meets the quantity ordered by the user, and if so, start the rear field order processing unit 1015. Generally, the rear field order processing unit 1015 is started to perform rear field stock occupation for the commodity object related to the order.

The order processing system provided by the embodiment of this application also emphasizes that when the rear field stock occupation is performed successfully for the commodity object related to the order, the stock occupation type of the order is labeled as a rear field type, and this type of order is referred to as a rear field order. With this labeling manner, during subsequent order-picking batch generation, the rear field order is included in a rear field order-picking batch according to the order label, thus ensuring the order-picking and delivery efficiency of the rear field order.

When rear field stock occupation is performed for the commodity object related to the order, the rear field commodity stock may be occupied randomly, or rear field stock occupation may be performed according to a preset storage location occupation rule.

Randomly occupying rear field commodity stock means that any rear field stock can be occupied. In this case, rear field stock occupation can be performed as long as the total quantity of the rear field stock meets the ordering quantity.

When the rear field commodity stock cannot be occupied randomly, a storage location occupation rule can be set to limit the modes of occupying rear field storage locations. The storage location occupation rule can specify the types of rear field storage locations in which commodity stock can be occupied, or it can directly specify the specific rear field storage locations in which commodity stock can be occupied.

The reason for performing rear field stock occupation according to a preset storage location occupation rule is that in the actual operation of the store, the stock of one commodity object may be stored in multiple storage locations. Some of the storage locations are located in the front field of the store, and some of the storage locations are located in the rear field of the store. In addition, among the multiple storage locations in the rear field of the store, the stock of some storage locations can be occupied by online orders, and the stock of some storage locations cannot be occupied by online orders. For example, the types of rear field storage locations can be classified as order-picking positions, processing positions, storage positions, and return positions. For online orders, commodity stock stored in return positions usually cannot be occupied by online orders. Therefore, it is necessary to specify, by the rear field occupation rule, the specific types of rear field storage locations in which commodity stock can be occupied, or even the specific rear field storage locations in which commodity stock can be occupied.

For example, the storage location occupation rule may be set as follows: rear field stock in order-picking positions, processing positions, and storage positions can be occupied, and rear field stock in return positions cannot be occupied. Or, the storage location occupation rule may be set as follows: stock in rear field storage locations A, B, and C can be occupied.

It should be noted that the storage location occupation rule may be a universal rule for orders, or it may be a special rule for specific commodity objects. For example, the storage location occupation rule may be set as follows: all commodity objects can occupy rear field stock in order-picking positions, processing positions, and storage locations. Or, the storage location occupation rule may be set as follows: "vegetable" commodity objects can only occupy rear field stock in order-picking positions and storage locations, etc.

When controlling the rear field stock that can be occupied by the order according to the preset storage location occupation rule, it is necessary to first calculate the stock quantity that can be occupied in the rear field. In a specific implementation, the rear field stock judging unit 1013 may include a rear field stock quantity acquisition sub-unit 10131 and a rear field stock judging sub-unit 10133.

The rear field stock quantity acquisition sub-unit 10131 is configured to acquire, according to the preset storage location occupation rule, storage location information of the rear field stock that can be occupied by the commodity object, and acquire the rear field stock quantity of the commodity object according to the stock quantity of each of the storage locations. The rear field stock judging sub-unit 10133 is configured to judge whether the acquired rear field stock quantity is greater than or equal to the ordered quantity.

According to the preset storage location occupation rule, the storage location information of the rear field stock that can be occupied by the commodity objects can be acquired. For example, the storage location occupation rule is "all commodity objects can occupy rear field stock in order-picking positions, processing positions, and storage positions", and the acquired storage location information of the rear field stock that can be occupied by the commodity objects is: identifiers of all storage locations in order-picking positions, processing positions, and storage positions in the rear field in which stock of the commodity objects related to the order are stored. For example, storage locations of the order-picking position, processing position and storage position types storing "tomato" include: storage location 1, storage location 3, storage location 4, and so on. The specific stock of each storage location is usually recorded in the order processing system. By querying these records, the stock quantity of each storage location can be acquired. After the stock quantities of these storage locations are processed statistically, the rear field stock quantities of the commodity objects can be acquired.

In addition, in a practical application, the commodity ordering information input by the user may include ordering information for a plurality of commodity objects. In this case, the rear field stock judging unit 1013 needs to separately judge, for each commodity object ordered by the user, whether the rear field stock quantity of the commodity object meets the ordering quantity of the commodity object, and only when the rear field stock quantities of all the commodity objects meet the ordering quantities can the rear field order processing unit 1015 be started to perform rear field stock occupation for the various commodity objects related to the order and label the stock occupation type of the order as the rear field type.

So far, the processing method of rear field stock occupation when the rear field stock quantity of the commodity object meets the ordering quantity is explained. However, in practical applications, the rear field stock of the commodity object may not meet the user's purchase demand. For example, the user wants to purchase 5 commodity objects A, but there are only 4 commodity objects in the rear field stock. Therefore, the order processing system provided in this application also needs perform processing when the rear field stock quantity of the commodity object cannot meet the ordering quantity. In the following, the stock occupation mode when the rear field stock quantity of the commodity object cannot meet the ordering quantity is further explained.

In the order processing system provided by the embodiment of this application, the order processing apparatus 101 further includes a non-rear field order processing sub-unit 1017. When the judgment result of the rear field stock judging unit 1013 is no, that is, when the rear field stock quantity of the commodity object cannot meet the ordering quantity, the non-rear field order processing sub-unit 1017 will be started.

The non-rear field order processing sub-unit 1017 is configured to perform stock occupation for the commodity object related to the order according to a preset stock occupation mode; label the stock occupation type of the order as a front field type if the order occupies front field stock; and label the stock occupation type of the order as a front-rear field hybrid type if the order occupies front field stock and rear field stock.

The non-rear field order processing sub-unit 1017 firstly performs stock occupation for the commodity object related to the order according to the preset stock occupation mode. The preset stock occupation mode refers to the manner of performing stock occupation for the commodity object when rear field stock occupation cannot be performed for the entire commodity object. The preset stock occupation mode includes, but is not limited to, occupying front field stock after the rear field stock is fully occupied, or occupying rear field stock after the front field stock is fully occupied, or occupying front field stock only. For example, in the case of "occupying front field stock after the rear field stock is fully occupied", all available rear field stock will be occupied first, and for the remaining stock quantity, front field stock will be occupied.

It should be noted that the stock occupation mode may be a universal mode for orders or a specified mode for specific commodity objects. For example, the stock occupation mode may be set as follows: all commodity objects "occupy front field stock after the rear field stock is fully occupied". Or, the stock occupation mode may be set as follows: "vegetable" commodity objects "occupy front field stock after the rear field stock is fully occupied".

The non-rear field order processing sub-unit 1017, after performing stock occupation for the commodity object related to the order, also needs to label the stock occupation type of the order according to the specific stock occupation situation, labeling the order occupation type of the order as the front field type if the order occupies front field stock, and labeling the stock occupation type of the order as the front-rear field hybrid type if the order occupies front field stock and rear field stock.

In specific implementation, when the order includes multiple commodity objects, if the rear field stock quantities of a part of the commodity objects can meet the ordering quantities, and the rear field stock quantities of the other part of the commodity objects cannot meet the ordering quantities, rear field stock occupation can be performed for the commodity objects with rear field stock quantities meeting the ordering quantities. For the commodity objects with rear field stock quantities not meeting the ordering quantities, all available rear field stock can be occupied first, and front field stock of corresponding quantities will be occupied for the part that does not meet the ordering quantities. With this processing manner, front and rear field stock competition can be reduced as much as possible.

When the order includes multiple commodity objects, labeling the stock occupation type of the order needs to reference the stock occupation mode of each commodity object. Only when all the commodity objects occupy rear field stock can the stock occupation type of the order be labeled as the rear field type. When all the commodity objects occupy front field stock, the stock occupation type of the order can be labeled as the front field type. If some commodity objects occupy front field stock and some commodity objects occupy rear field stock, or if some commodity objects occupy both rear field stock and front field stock, the stock occupation type of the order may be labeled as a front-rear field hybrid type.

The result of processing an order by the order processing apparatus 101 will be exemplified below. For example, a user orders 10 kg of "tomato", 7.5 kg of "celery", and 25 kg of "pork". If the rear field stock of "tomato" is 25 kg, the rear field stock of "celery" is 15 kg, and the rear field stock of "pork" is 25 kg, the rear field stock quantities of the various ordered commodity objects all meet the ordering quantities, so rear field stock occupation is performed for the order, and the stock occupation type of the order is labeled as a rear field type. For another example, if the rear field stock of "tomato" is 5 kg, the rear field stock of "celery" is 15 kg, and the rear field stock of "pork" is 25 kg, the rear field stock quantity of "tomato" cannot meet the ordering quantity. Therefore, "tomato" will occupy 5 kg of rear field stock and 5 kg of front field stock, the other two commodity objects will occupy rear field stock, and the stock occupation type of the order will be labeled as the front-rear field hybrid type.

So far, a specific implementation manner of the order processing apparatus 101 has been described. The order processed by the order processing apparatus 101 is usually stored in an order pool. When an order-picking batch generation operation is triggered, the order-picking batch generation apparatus 102 is started to combine the orders in the order pool into order-picking batches.

In the prior art, the manner of generating order-picking batches is mainly based on customer-defined dimensions. For example, order-picking batches are generated based on dimensions such as delivery time, delivery address, and commodity weight and volume. However, for stores that support online and offline sales simultaneously, generating order-picking batches simply based on these dimensions can easily cause the problem of failed order-picking of an online order of a commodity since the same commodity has been bought offline.

The order processing system provided by this application emphasizes that outgoing orders are included in order-picking batches matching their attributes according to the stock occupation type dimension of the orders. The order-picking batch generation apparatus 102 includes an order acquisition unit 1021 and an order batching unit 1023. The order acquisition unit 1021 is configured to acquire at least one outgoing order. The order batching unit 1023 is configured to include the at least one order in an order-picking batch matching an attribute of the order according to the stock occupation type of the order.

As mentioned above, the stock occupation type of the order may include: a rear field order, a front field order, and a front-rear field hybrid order. The purpose of labeling the order as a rear field type, a front field type, or a front-rear field hybrid type is to group the orders of different stock occupation types into different order-picking batches. This processing manner can group orders of the rear field type in a rear field order-picking batch matching their attributes, instead of grouping orders of the rear field type with orders of the front field type or the front-rear field hybrid type in one order-picking batch, thus enabling separate order-picking for orders of the rear field type. Therefore, order-picking can be implemented smoothly and efficiently for the orders.

The order processing system provided by this application, when triggering the order-picking batch generation operation, first needs to take out at least one outgoing order, i.e., an order requiring order-picking and delivery, from a pool of outgoing orders through the order acquisition unit 1021. Then, orders of different stock occupation types are grouped into different order-picking batches by the order batching unit 1023.

In a specific implementation, the order batching unit 1023 may include the following units: a rear field order batching sub-unit 10231, a front field order batching sub-unit 10233, and a front-rear field hybrid order batching sub-unit 10235.

The rear field order batching sub-unit 10231 is configured to screen out orders of the rear field type from at least one outgoing order, and then include each order of the rear field type in a rear field order-picking batch matching an attribute of the order according to a preset order batching rule.

The front field order batching sub-unit 10233 is configured to screen out orders of the front field type from at least one outgoing order, and then include each order of the front field type in a front field order-picking batch matching an attribute of the order according to the preset order batching rule.

The front-rear field hybrid order batching sub-unit 10235 is configured to screen out orders of the front-rear field hybrid type from at least one outgoing order, and then include each order of the front-rear field hybrid type in a front-rear field hybrid order-picking batch matching an attribute of the order according to the preset order batching rule.

The preset order batching rule refers to a rule according to which the outgoing orders are batched. The preset order batching rule may be set according to actual business requirements.

In practical applications, a deliverer usually delivers commodities of adjacent delivery addresses in a centralized manner. For example, commodities having delivery addresses within the range of Zhongguancun Street will be distributed to a deliverer responsible for delivery work in the area for unified delivery. Therefore, the preset order batching rule usually needs to be formed based on the area to which the delivery address of the order belongs.

In addition, considering that different orders feature different degrees of delivery urgency, different weight and volume levels, etc., the preset order batching rule may also be formed jointly based on the area of the delivery address of the order, the delivery urgency, the weight and volume level, and other attributes. With this processing manner, orders can be delivered and managed with finer granularity.

In this embodiment, the urgency types of the orders are classified into a scheduled type and an immediate type, and the weight and volume levels of the orders are classified into a common type and a large type. The order batching rule is set according to the urgency type, the weight volume level, and the area of the delivery address of the order. For example, the preset order batching rule may include the following rules: 1) orders having delivery addresses belonging to the same area, weight and volume levels of the large type, and urgency of the immediate type are combined into one batch for processing; 2) orders having delivery addresses belonging to the same area, weight and volume levels of the large type, and urgency of the scheduled type are combined into one batch for processing; 3) orders having delivery addresses belonging to the same area, weight and volume levels of the common type, and urgency of the immediate type are combined into one batch for processing; and 4) orders having delivery addresses belonging to the same area, weight and volume levels of the common type, and urgency of the scheduled type are combined into one batch for processing.

It should be noted that the preset order batching rule is only a specific implementation manner. In an actual application, the order type of a to-be-delivered order may be set to other types according to business requirements, and correspondingly, the preset order batching rule may be set to other rules. The above-mentioned different forms of order batching rules are only variations of the specific implementation manner and do not deviate from the essence of this application. Therefore, they all fall within the protection scope of this application.

Order-picking batches generated by the order processing system provided in this application are exemplified below. For example, there are 100 outgoing orders, among which 70 orders are orders of the rear field type, 20 orders are orders of the front-rear field hybrid type, and 10 orders are orders of the front field type. The following order-picking batches can be generated by the order processing system provided in this application: 5 rear field order-picking batches each corresponding to a different delivery area, a different urgency level, and a different weight and volume level, where commodities of these batches are all stored in the rear field of the store; 3 front-rear field hybrid order-picking batches each corresponding to a different delivery area, a different urgency level, and a different weight and volume level, where some commodities of these batches are stored in the rear field of the store, and some are stored in the front field of the store; 4 front field order-picking batches each corresponding to a different delivery area, a different urgency level, and a different weight and volume level, where commodities of these batches are all stored in the front field of the store. During order-picking for the above 5 rear field order-picking batches, the problem of front and rear field stock competition will not occur.

In the order processing system provided in this application, goods of a commodity are separately stored in a front field and a rear field of a store, and the commodity storage locations are set as front field types and rear field types. When the store receives an online order, rear field stock occupation is performed for the order. If the rear field stock occupation succeeds, the stock occupation type of the order is labeled as the rear field type. When an order-picking batch is generated, at least one outgoing order is included in an order-picking batch matching an attribute of the order according to the stock occupation type of the order. In this processing manner, stock occupied by online orders can be effectively separated from stock of commodities sold offline, so that online stock and offline stock will not affect each other, thus avoiding the problem of failed order-picking and delivery due to insufficient stock of online orders. Therefore, the order processing system provided in this application can effectively improve the order-picking and delivery efficiency of the store.

Corresponding to the order processing system described above, an order processing method is further provided in this application. Please refer to FIG. 2, which is a flowchart of an embodiment of an order processing method according to this application. The parts of this embodiment having content identical to that in the first embodiment are not elaborated again, and reference can be made to the corresponding parts in the first embodiment. The order processing method according to this application includes the following steps.

In step S101, a corresponding order is generated according to commodity ordering information input by a user.

In step S103, it is judged whether the rear field stock quantity of a commodity object related to the order meets the ordering quantity; and if yes, the process enters the next step.

In a specific implementation, before step S103, the method may further include: 1) acquiring, according to a preset storage location occupation rule, storage location information of the rear field stock that can be occupied by the commodity object; and 2) acquiring the rear field stock quantity of the commodity object according to the stock quantity of each of the storage locations.

The preset storage location occupation rule includes at least one of the following rules: a universal storage location occupation rule for orders, and a specified storage location occupation rule for commodity objects.

In an actual application, the commodity object related to the order may include a plurality of commodity objects. Correspondingly, step S103 may be implemented in the following manner: judging whether the rear field stock quantity of each of the commodity objects meets the ordering quantity thereof, wherein the judgment result of the step is yes when the rear field stock quantities of the various commodity objects all meet the ordering quantities thereof.

In step S105, rear field stock occupation is performed for the commodity object related to the order, and the stock occupation type of the order is labeled as a rear field type.

In a specific implementation, if the judgment result of step S103 is no, the following steps are performed: performing stock occupation for the commodity object related to the order according to a preset stock occupation mode; labeling the stock occupation type of the order as a front field type if the order occupies front field stock; and labeling the stock occupation type of the order as a front-rear field hybrid type if the order occupies front field stock and rear field stock.

The preset stock occupation mode includes: occupying front field stock after the rear field stock is fully occupied, or occupying front field stock after the front field stock is fully occupied.

An order processing method is provided in the above embodiment, and correspondingly, an order processing apparatus is further provided in this application. The apparatus corresponds to the embodiment of the above method.

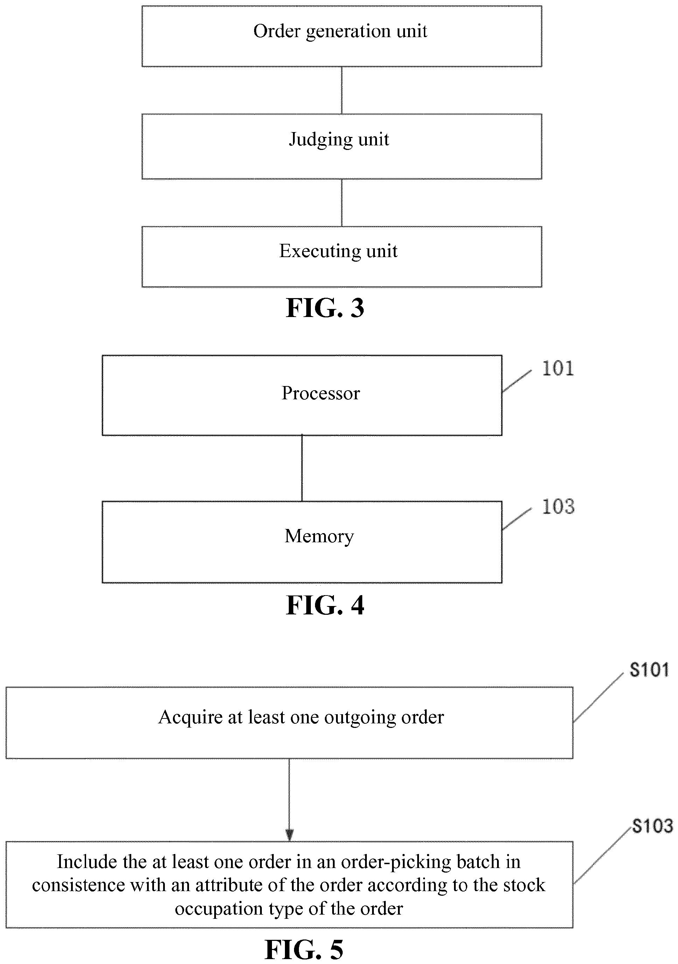

Please refer to FIG. 3, which is a schematic diagram of an embodiment of an order processing apparatus according to this application. The apparatus embodiment is described relatively simply as the apparatus embodiment is substantially similar to the method embodiment, and the relevant portions can be known with reference to the description of the parts in the method embodiment. The apparatus embodiment described below is merely illustrative.

The order processing apparatus of this embodiment includes:
an order generation unit, configured to generate a corresponding order according to commodity ordering information input by a user;
a judging unit configured to judge whether the rear field stock quantity of a commodity object related to the order meets the ordering quantity; and if yes, proceed to the next step; and
an executing unit configured to perform rear field stock occupation for the commodity object related to the order and label the stock occupation type of the order as a rear field type.

Please refer to FIG. 4, which is a schematic diagram of an embodiment of an electronic device according to this application. The device embodiment is described relatively simply as the device embodiment is substantially similar to the method embodiment, and the relevant portions can be known with reference to the description of the parts in the method embodiment. The device embodiment described below is merely illustrative.

The electronic device of this embodiment includes: a processor 101; and a memory 103.

The memory 103 is configured to store a program for implementing an order processing method, wherein after the device is powered on and runs the program of the order processing method through the processor 101, the following steps are performed:
generating a corresponding order according to commodity ordering information input by a user;
judging whether the rear field stock quantity of a commodity object related to the order meets the ordering quantity; and if yes, proceeding to the next step; and
performing rear field stock occupation for the commodity object related to the order, and labeling the stock occupation type of the order as a rear field type.

Corresponding to the order processing system described above, an order-picking batch generation method is further provided in this application. Please refer to FIG. 5, which is a flowchart of an embodiment of an order-picking batch generation method according to this application. The parts of this embodiment having content the same as that in the first embodiment are not elaborated again, and reference can be made to the corresponding parts in the first embodiment. The order-picking batch generation method according to this application includes the following steps.

In step S 101, at least one outgoing order is acquired.

In step S103, the at least one order is included in an order-picking batch matching an attribute of the order according to the stock occupation type of the order.

The stock occupation types include: a rear field type, a front field type, or a front-rear field hybrid type.

In a specific implementation, the step S103 may include the following steps: 1) screening out orders of the rear field type from the at least one order, and including each order of the rear field type in a rear field order-picking batch matching an attribute of the order according to a preset order batching rule; 2) screening out orders of the front field type from the at least one order, and including each order of the front field type in a front field order-picking batch matching an attribute of the order according to the preset order batching rule; and 3) screening out orders of the front-rear field hybrid type from the at least one order, and including each order of the front-rear field hybrid type in a front-rear field hybrid order-picking batch matching an attribute of the order according to the preset order batching rule.

An order-picking batch generation method is provided in the above embodiment, and correspondingly, an order processing apparatus is further provided in this application. The apparatus corresponds to the embodiment of the above method.

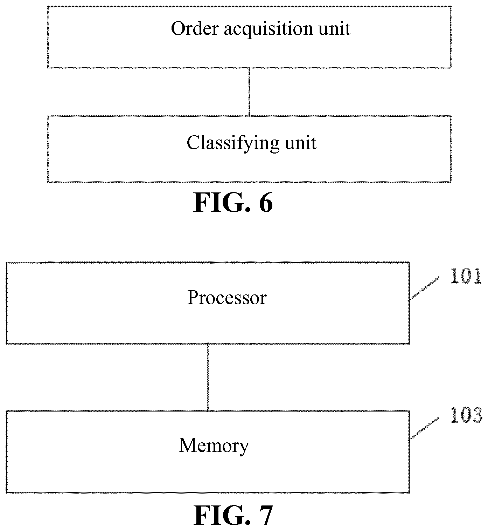

Please refer to FIG. 6, which is a schematic diagram of an embodiment of an order-picking batch generation apparatus according to this application. The apparatus embodiment is described relatively simply as the apparatus embodiment is substantially similar to the method embodiment, and the relevant portions can be known with reference to the description of the parts in the method embodiment. The apparatus embodiment described below is merely illustrative.

An order-picking batch generation apparatus in this embodiment includes:
an order acquisition unit configured to acquire at least one outgoing order; and
a classifying unit configured to include the at least one order in an order-picking batch matching an attribute of the order according to the stock occupation type of the order.

Please refer to FIG. 7, which is a schematic diagram of an embodiment of an electronic device according to this application. The device embodiment is described relatively simply as the device embodiment is substantially similar to the method embodiment, and the relevant portions can be known with reference to the description of the parts in the method embodiment. The device embodiment described below is merely illustrative.

The electronic device of this embodiment includes: a processor 101; and a memory 103.

The memory is configured to store a program for implementing an order-picking batch generation method, wherein after the device is powered on and runs the program of the order-picking batch generation method through the processor, the following steps are performed: acquiring at least one outgoing order; and including the at least one order in an order-picking batch matching an attribute of the order according to the stock occupation type of the order.

The present invention is disclosed in the above through preferred embodiments, but they are not intended to limit the present invention. Any person skilled in the art can make possible variations and modifications without departing from the spirit and scope of the present invention. Therefore, the protection scope of the present invention should subject to the scope defined by the claims of the present invention.

In a typical configuration, a computing device includes one or more processors (CPUs), an input/output interface, a network interface, and a memory.

The memory may be in the form of a volatile memory, a random access memory (RAM), and/or a non-volatile memory, such as a read-only memory (ROM) or a flash RAM, in a computer-readable medium. Memory is an example of a computer readable medium.
1. Computer readable media include non-volatile or volatile, and movable or non-movable media, and may achieve information storage by means of any method or technology. Information may be computer readable instructions, data structures, program modules, or other data. Examples of computer storage media include, without limitation, phase change memory (PRAM), static random access memory (SRAM), dynamic random access memory (DRAM) and other types of random access memory (RAM), read-only memory (ROM), electrically erasable programmable read-only memory (EEPROM), flash memory or other memory technologies, compact disc read-only memory (CD-ROM), digital versatile disc (DVD) or other optical storages, cassette tape, magnetic tape/magnetic disk storage or other magnetic storage devices, or any other non-transmission medium. They may be used to store information accessible to the computing device. According to the definition in this text, computer-readable media do not include transitory media, such as modulated data signals and carriers.
2. Those skilled in the art should understand that, the embodiments of this application may be provided as methods, systems, or computer program products. Therefore, this application may be implemented as a pure hardware embodiment, a pure software embodiment, or an embodiment combining software and hardware. Moreover, this application may be in the form of a computer program product implemented on one or more computer-usable storage media (including, but are not limited to, magnetic disk memory, CD-ROM, optical memory, and the like) that contain computer-usable program codes.

## Claims

1. An order processing system, comprising: an order processing apparatus and an order-picking batch generation apparatus,
wherein the order processing apparatus comprises: an order generation unit, a rear field stock judging unit, and a rear field order processing unit;
the order generation unit is configured to generate a corresponding order according to commodity ordering information input by a user;
the rear field stock judging unit is configured to judge whether the rear field stock quantity of a commodity object related to the order meets the ordering quantity; and if yes, start the rear field order processing unit;
the rear field order processing unit is configured to perform rear field stock occupation for the commodity object related to the order and label the stock occupation type of the order as a rear field type;
the order-picking batch generation apparatus comprises an order acquisition unit and an order batching unit,
the order acquisition unit is configured to acquire at least one outgoing order; and
the order batching unit is configured to include the at least one order in an order-picking batch matching an attribute of the order according to the stock occupation type of the order.

2. The order processing system according to claim 1, wherein the rear field stock judging unit comprises:
a rear field stock quantity acquisition sub-unit configured to acquire, according to a preset storage location occupation rule, storage location information of rear field stock that can be occupied by the commodity object, and acquire the rear field stock quantity of the commodity object according to the stock quantity of each of the storage locations;
a rear field stock judging sub-unit configured to judge whether the rear field stock quantity is greater than or equal to the ordering quantity.

3. The order processing system according to claim 2, wherein the preset storage location occupation rule comprises at least one of the following rules: a universal storage location occupation rule for orders and a specified storage location occupation rule for commodity objects.

4. The order processing system according to claim 1, wherein:
the commodity object related to the order comprises a plurality of commodity objects; and
the rear field stock judging unit is specifically configured to judge whether the rear field stock quantity of each of the commodity objects meets the ordering quantity thereof, wherein the judgment result of the unit is yes when the rear field stock quantities of the various commodity objects all meet the ordering quantities thereof.

5. The order processing system according to claim 1 or 4, wherein the order processing apparatus comprises a non-rear field order processing unit;
the rear field stock judging unit is configured to start the non-rear field order processing unit if the judgment result is no; and
the non-rear field order processing unit is configured to perform stock occupation for the commodity object related to the order according to a preset stock occupation mode; label the stock occupation type of the order as a front field type if the order occupies front field stock; and label the stock occupation type of the order as a front-rear field hybrid type if the order occupies front field stock and rear field stock.

6. The order processing system according to claim 5, wherein the preset stock occupation mode comprises: occupying front field stock after the rear field stock is fully occupied, or occupying rear field stock after the front field stock is fully occupied.

7. The order processing system according to claim 1, wherein the order batching unit comprises:
a rear field order batching sub-unit configured to screen out orders of the rear field type from the at least one order, and include each order of the rear field type in a rear field order-picking batch matching an attribute of the order according to a preset order batching rule.

8. The order processing system according to claim 7, wherein the order batching unit comprises:
a front field order batching sub-unit configured to screen out orders of the front field type from the at least one order, and include each order of the front field type in a front field order-picking batch matching an attribute of the order according to the preset order batching rule; and
a front-rear field hybrid order batching sub-unit configured to screen out orders of the front-rear field hybrid type from the at least one order, and include each order of the front-rear field hybrid type in a front-rear field hybrid order-picking batch matching an attribute of the order according to the preset order batching rule.

9. An order processing method, comprising:
generating a corresponding order according to commodity ordering information input by a user;
judging whether the rear field stock quantity of a commodity object related to the order meets the ordering quantity; and if yes, proceeding to the next step; and
performing rear field stock occupation for the commodity object related to the order, and labeling the stock occupation type of the order as a rear field type.

10. The order processing method according to claim 9, wherein before judging whether the rear field stock quantity of a commodity object related to the order meets the ordering quantity, the method comprises:
acquiring, according to a preset storage location occupation rule, storage location information of rear field stock that can be occupied by the commodity object; and
acquiring the rear field stock quantity of the commodity object according to the stock quantity of each of the storage locations.

11. The order processing method according to claim 10, wherein the preset storage location occupation rule comprises at least one of the following rules: a universal storage location occupation rule for orders, and a specified storage location occupation rule for commodity objects.

12. The order processing method according to claim 9, wherein the commodity object related to the order comprises a plurality of commodity objects; and
judging whether the rear field stock quantity of a commodity object related to the order meets the ordering quantity is performed in the following manner:
judging whether the rear field stock quantity of each of the commodity objects meets the ordering quantity thereof, wherein the judgment result is yes when the rear field stock quantities of the various commodity objects all meet the ordering quantities thereof.

13. The order processing method according to claim 9 or 12, wherein if the judgment result is no, the following steps are performed:
performing stock occupation for the commodity object related to the order according to a preset stock occupation mode;
labeling the stock occupation type of the order as a front field type if the order occupies front field stock; and
labeling the stock occupation type of the order as a front-rear field hybrid type if the order occupies front field stock and rear field stock.

14. The order processing method according to claim 13, wherein the preset stock occupation mode comprises: occupying front field stock after the rear field stock is fully occupied, or occupying rear field stock after the front field stock is fully occupied.

15. An order processing apparatus, comprising:
an order generation unit configured to generate a corresponding order according to commodity ordering information input by a user;
a judging unit configured to judge whether the rear field stock quantity of a commodity object related to the order meets the ordering quantity; and if yes, proceed to the next step; and
an executing unit configured to perform rear field stock occupation for the commodity object related to the order and label the stock occupation type of the order as a rear field type.

16. An electronic device, comprising:
a processor; and
a memory configured to store a program for implementing an order processing method, wherein after the device is powered on and runs the program of the order processing method through the processor, the following steps are executed:
generating a corresponding order according to commodity ordering information input by a user;
judging whether the rear field stock quantity of a commodity object related to the order meets the ordering quantity; and if yes, proceeding to the next step; and
performing rear field stock occupation for the commodity object related to the order, and labeling the stock occupation type of the order as a rear field type.

17. An order-picking batch generation method, comprising:
acquiring at least one outgoing order; and
including the at least one order in an order-picking batch matching an attribute of the order according to the stock occupation type of the order.

18. The order-picking batch generation method according to claim 17, wherein the stock occupation type comprises: a rear field type, a front field type, or a front-rear field hybrid type.

19. The order-picking batch generation method of claim 18, wherein including the at least one order to an order-picking batch matching an attribute of the order according to the stock occupation type of the order comprises:
screening out orders of the rear field type from the at least one order, and including each order of the rear field type in a rear field order-picking batch matching an attribute of the order according to a preset order batching rule;
screening out orders of the front field type from the at least one order, and including each order of the front field type in a front field order-picking batch matching an attribute of the order according to the preset order batching rule; and
screening out orders of the front-rear field hybrid type from the at least one order, and including each order of the front-rear field hybrid type in a front-rear field hybrid order-picking batch matching an attribute of the order according to the preset order batching rule.

20. An order-picking batch generation apparatus, comprising:
an order acquisition unit configured to acquire at least one outgoing order; and
a classifying unit configured to include the at least one order in an order-picking batch matching an attribute of the order according to the stock occupation type of the order.

21. An electronic device, comprising:
a processor; and
a memory configured to store a program for implementing an order-picking batch generation method, wherein after the device is powered on and runs the program of the order-picking batch generation method through the processor, the following steps are executed:
acquiring at least one outgoing order; and
including the at least one order in an order-picking batch matching an attribute of the order according to the stock occupation type of the order.
